# EUROPÄISCHE PATENTSCHRIFT

(11) **EP 2 129 925 B1**
(45) Veröffentlichungstag und Bekanntmachung des Hinweises auf die Patenterteilung: **25.05.2011**
(21) Anmeldenummer: 08708310.1
(22) Anmeldetag: 29.01.2008
(51) Int. Cl.: F16C 19/30, F16C 33/46, F16C 33/50, F16C 33/76, F16C 33/66

(54) **MEHRTEILIGER AXIALKÄFIG FÜR EIN GROSSWÄLZLAGER**
MULTI-PART AXIAL CAGE FOR A LARGE-DIAMETER ROLLER BEARING
CAGE AXIALE EN PLUSIEURS PARTIES POUR UN PALIER À ROULEMENT DE GRANDE DIMENSION

(30) Priorität: 28.02.2007 DE 102007009811
(43) Veröffentlichungstag der Anmeldung: 09.12.2009
(73) Patentinhaber: Schaeffler Technologies GmbH & Co. KG, 91074 Herzogenaurach (DE)
(72) Erfinder: ALBRECHT, Bernhard, 91074 Herzogenaurach (DE); SCHWINGHAMMER, Reinhard, 90587 Tuchenbach (DE)
(86) Internationale Anmeldenummer: PCT/EP2008/050993
(87) Internationale Veröffentlichungsnummer: WO 2008/104434

(56) Entgegenhaltungen:
- EP-A- 0 457 020
- DE-A1- 1 813 565
- DE-A1- 10 151 263
- DE-U- 7 213 160
- US-A- 3 652 141
- US-A- 4 598 957

## Beschreibung

### Gebiet der Erfindung

Die Erfindung betrifft einen mehrteiligen Axialkäfig für ein Großwälzlager, bestehend aus einem Metallband, dessen kreisförmig ausgebildete Seitenborde durch Stege miteinander verbunden sind, sodass Freiräume gebildet sind, in die Käfigfenster aus einem Kunststoff mit Taschen zur Aufnahme von Wälzkörpern eingesetzt sind, wobei die Käfigfenster aus in Umfangsrichtung voneinander beabstandeten Längswänden und in radialer Richtung voneinander beabstandeten Querwänden bestehen und die Käfigfenster in radialer Richtung voneinander beabstandeten Nuten aufweisen, in die die Seitenborde des Metallbandes eingreifen, die Käfigfenster Haltenasen zur Halterung der Wälzkörper und einen Führungsbord aufweisen, der zur Führung des Axialkäfigs an einem der Lagerringe anliegt.

### Hintergrund der Erfindung

Ein derart gattungsgemäß ausgebildeter Käfig für ein Großwälzlager ist aus der EP 0 457 020 A1 vorbekannt. Der Käfig für dieses Großwälzlager besteht aus einem Metallband, das mit Ausnehmungen versehen ist. Die Ausnehmungen sind rechteckig ausgebildet. Dadurch ergeben sich am Metallband Seitenstege und Zwischenstege. In diese Ausnehmungen sind Kunststofffenster eingesetzt. Diese besitzen Innenwände, die umlaufend in eine Ausnehmung eingreifen. An die Innenwände schließen sich Kragen an, die die Seitenstege übergreifen und an der Oberfläche des Metallbandes anliegen.

Bei diesem gattungsgemäßen Käfig ist von Nachteil, dass das Metallband und die Kunststofffenster in axialer Richtung nahezu die gleiche Ausdehnung aufweisen, sodass ein hoher Stahleinsatz nötig ist, der wiederum eine unerwünscht hohe Masse des Käfigs bedingt. Es ist weiter von Nachteil, dass in axialer Richtung zwischen den Laufbahnen der Wälzkörper und dem Käfig eine relativ große offene Fläche existiert, die ein unerwünschtes vorzeitiges Abfließen von Schmiermittel aus dem Lagerinneren begünstigt.

### Zusammenfassung der Erfindung

Ausgehend von den Nachteilen des bekannten Standes der Technik liegt der Erfindung daher die Aufgabe zugrunde, einen gattungsgemäßen Käfig für ein Großwälzlager derart weiterzubilden, dass einerseits sein Gewicht verringert ist und andererseits seine Abdichtung verbessert ist.

Erfindungsgemäß wird diese Aufgabe nach dem kennzeichnenden Teil von Anspruch 1 in Verbindung mit dessen Oberbegriff dadurch gelöst, dass das Metallband als ein scheibenringförmiger Flachbandkäfig ausgebildet ist und die Käfigfenster an ihrem dem Führungsbord gegenüberliegenden Ende mit je einem Dichtelement versehen sind, das einen zwischen Laufbahnen der Wälzkörper gebildeten axialen Spalt abdeckt, wobei sich die Dichtelemente der einzelnen Käfigfenster in Umfangsrichtung überdecken.

Die mit der Erfindung erzielten Vorteile liegen insbesondere darin, dass der Käfig für ein Großwälzlager in einfacher Weise mit wenigen Bauteilen herstellbar ist, indem die Käfigfenster in den scheibenringförmigen Flachbandkäfig eingesetzt werden. Durch die unterschiedliche axiale Ausdehnung von scheibenringförmigen Flachbandkäfig und Käfigfenster ist sichergestellt, dass ein derart zusammengesetzter Käfig im Gegensatz zu den bisher bekannten Käfigen weniger Metall einsetzen muss und daher seine Masse verringert, was sich bei Betreiben eines Lagers positiv auf dessen Laufverhalten auswirkt. Es ist weiter von Vorteil, dass ein problemloses Auswechseln von schadhaften Käfigfenstern in einfacher Weise möglich ist, sodass der scheibenringförmige Flachbandkäfig weiter verwendet werden kann. Ein weiterer wesentlicher Vorteil liegt darin, dass das Dichtelement des erfindungsgemäßen Käfig den von den Laufbahnen der Wälzkörper gebildeten axialen Spalt abdeckt, sodass das Schmiermittel das Wälzlager nicht vorzeitig verlassen kann. Durch die Überdeckung der einzelnen Dichtelemente in Umfangsrichtung ist sichergestellt, dass diese Abdichtung besonders wirkungsvoll ist.

Weitere vorteilhafte Ausgestaltungen der Erfindung sind in den Ansprüchen 2 bis 9 beschrieben.

So hat es sich nach Anspruch 2 als vorteilhaft erwiesen, wenn die Dichtelemente als rechteckige Wandungen ausgebildet sind, die an ihren in radialer Richtung gegenüberliegenden Enden mit je einer Ausnehmung versehen sind. Dadurch ist sichergestellt, dass das Lager einerseits abgedichtet ist, während andererseits durch die Ausgestaltung der Enden mit Ausnehmungen ein Einfluss auf die Schmiermitteldurchtrittsfähigkeit durch den Käfig realisierbar ist.

Durch die Merkmale gemäß Anspruch 3, nach denen die rechteckige Wandung des einen Käfigfensters an einem Ende in Umfangsrichtung eine radial versetzte Stufe aufweist, an der die rechteckige Wandung des nächsten Käfigfensters zur Anlage gelangt, sodass sich Stufe und Wandung in Umfangsrichtung überdecken, ist erreicht, dass der mehrteilige Axialkäfig über seinen gesamten Umfangsbereich abdichtende Wirkung zeigt.

Wie aus Anspruch 4 erkennbar, sollen die Längswände des Käfigfensters mit je einer gegenüberliegenden Haltenase zur formschlüssigen Verbindung mit einem Freiraum des Flachbandkäfigs versehen sein: Durch diese Schnappverbindung wird eine einfache Montage bzw. Demontage der Käfigfenster in die Ausnehmungen des Flachbandkäfigs realisiert.

Nach einem weiteren zusätzlichen Merkmal gemäß Anspruch 5 sollen die radial innen liegenden Querwände am axial oberen und am axial unteren Ende mit je zwei voneinander beabstandeten Vorsprüngen versehen sein. Auf diese Weise kann wiederum Einfluss auf die Durchtrittsfähigkeit von Schmiermittel durch den erfindungsgemäßen Käfig genommen werden.

Als vorteilhaft hat es sich gemäß Anspruch 6 erwiesen, wenn der scheibenringartige Flachbandkäfig aus wenigstens zwei Segmenten besteht, die an ihren beiden Enden formschlüssig miteinander verbindbar sind. Auf diese Weise können im Durchmesser große Lagerkäfige ohne Probleme zum Endkunden transportiert werden und von diesem in einfacher Weise zusammengesetzt werden. Dabei hat es nach einem weiteren Merkmal gemäß Anspruch 7 als vorteilhaft erwiesen, wenn jedes Segment an einem Ende einen Vorsprung und am anderen Ende eine Ausnehmung besitzt, die miteinander korrelieren.

Nach einem weiteren zusätzlichen Merkmal gemäß Anspruch 8 ist vorgesehen, dass eine Reihe von mehrteiligen Axialkäfigen einen unterschiedlichen Durchmesser aufweisen, die Umfangsausdehnung der Stege radial außen größer als die Umfangsausdehnung radial innen ist, wobei die geometrische Abmessung der Freiräume des Flachbandkäfigs und die geometrische Abmessung der Käfigfenster unabhängig vom Käfigdurchmesser immer gleich ist. Dies bedeutet, dass für im Durchmesser unterschiedlich große Axialkäfige sowohl die Freiräume des Flachbandkäfigs als auch die Käfigfenster die gleiche geometrische Abmessung aufweisen. Dadurch benötigt man lediglich je ein Werkzeug für das Ausstanzen der Freiräume im Flachbandkäfig und nur ein Spritzgusswerkzeug für das Herstellen der Käfigfenster.

Schließlich ist nach einem letzten Merkmal gemäß Anspruch 9 vorgesehen, dass der Axialkäfig in einem Axialteil einer Radial-Axial-Wälzlagerbaueinheit mit einem Innenring eingesetzt ist, zu dem koaxial ein Außenring angeordnet ist, zwischen denen zur Aufnahme von radialen Kräften Wälzkörper abrollen und mit beidseitig zur Aufnahme von axialen Kräften angeordneten, im Axialkäfig aufgenommenen zylindrischen Wälzkörpern, deren Laufbahnen einerseits von der Stirnfläche des Außenringes und andererseits von je einer Laufscheibe gebildet sind. Derartige kombinierte Radial-Axial-Wälzlager werden in vorteilhafter Weise für so genannte Rundtischlagerungen eingesetzt, die im Werkzeugmaschinenbau ein weit verbreitetes Anwendungsgebiet besitzen.

Weitere Merkmale der Erfindung ergeben sich aus der nachfolgenden Beschreibung und aus den Zeichnungen, in denen ein Ausführungsbeispiel der Erfindung in vereinfachter Form dargestellt ist.

### Kurze Beschreibung der Zeichnungen

Es zeigen:
- Figur 1: eine teilweise perspektivische Darstellung eines erfin- dungsgemäßen mehrteiligen Axialkäfigs für ein Großwälz- lager,
- Figur 2: einen Ausschnitt aus einer Draufsicht auf einen scheiben- ringförmigen Flachbandkäfig,
- Figuren 3 und 4: eine perspektivische Darstellung eines erfindungsgemä- ßen Käfigfensters von oben und von unten,
- Figuren 5 und 6: eine Draufsicht auf das Käfigfenster gemäß den Figuren 3 und 4,
- Figur 7: einen Schnitt entlang der Linie VII-VII in Figur 6,
- Figur 8: einen Schnitt entlang der Linie VIII-VIII in Figur 6,
- Figur 9: einen Längsschnitt durch ein komplettes Rundtischlager und
- Figur 10: eine teilweise perspektivische Darstellung eines Rund- tischlagers

### Ausführliche Beschreibung der Zeichnungen

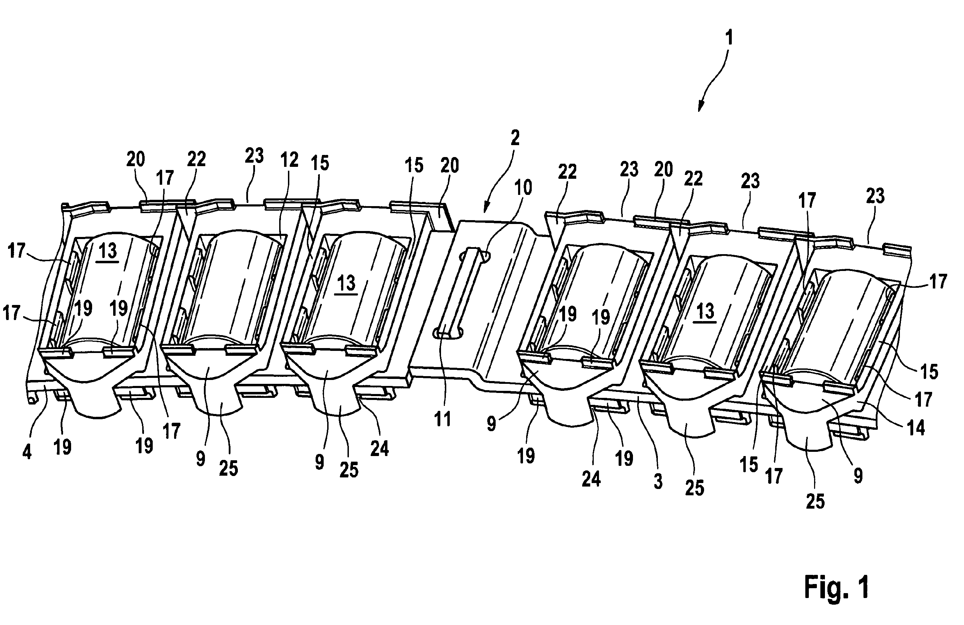

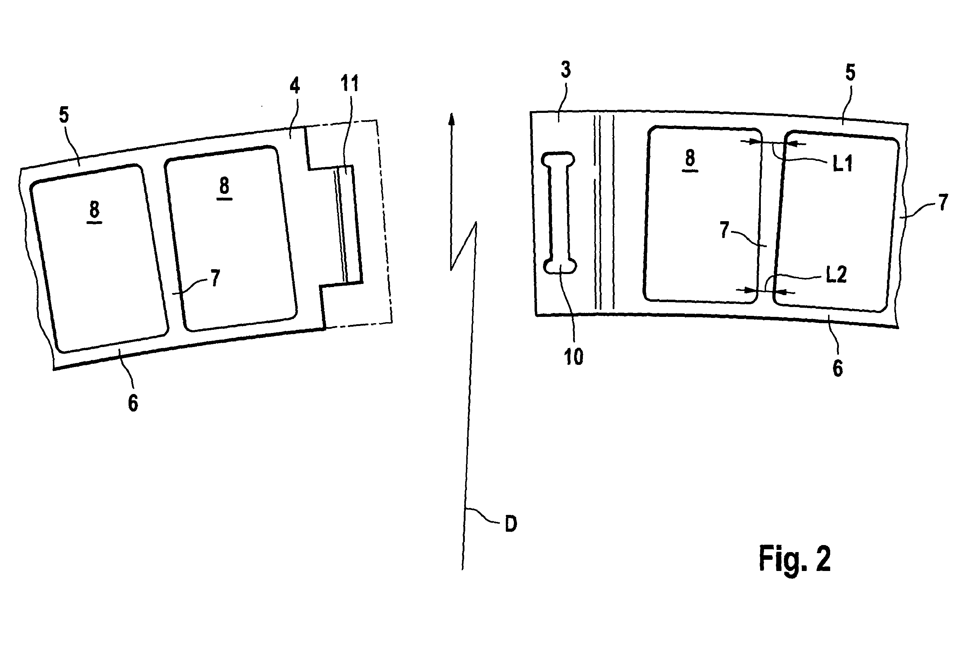

Wie aus den Figuren 1 und 2 ersichtlich, setzt sich der erfindungsgemäße Axialkäfig 1 für ein Großwälzlager aus dem scheibenringförmigen Flachbandkäfig 2 und den Käfigfenstern 9 zusammen, die aus einem Kunststoff gefertigt sind. Die axiale Stärke des scheibenringförmigen Flachbandkäfigs ist im Ausführungsbeispiel mit etwa 2 mm anzusetzen, während das Käfigfenster 9 eine axiale Ausdehnung im äußeren Bereich etwa 12 mm besitzt. Der scheibenringförmige Flachbandkäfig 2 wiederum besteht aus den Segmenten 3 und 4, die formschlüssig miteinander verbunden sind. Im Ausführungsbeispiel erfolgt dies derart, dass der Vorsprung 11 des Segmentes 4 in die Ausnehmung 10 des Segmentes 3 eingreift. Die Segmente 3, 4 des Flachbandkäfigs 2, die in vorteilhafter Weise durch Ausstanzen hergestellt sind, wiederum weisen kreisförmig ausgebildete Seitenborde 5, 6 auf, die durch Stege 7 miteinander verbunden sind. Auf diese Weise sind in den Segmenten 3, 4 Freiräume 8 gebildet, in die wiederum die Käfigfenster 9 eingesetzt sind, die Taschen 12 zur Aufnahme der zylinderförmig ausgebildeten Wälzkörper 13 aufweisen.

Wie Figur 2 zeigt, verlaufen die Stege 7 des scheibenringförmigen Flachbandkäfigs 2 in radialer Richtung von außen nach innen konisch, d. h., die Umfangsausdehnung L1 der Stege 7 im äußeren Bereich ist größer als die Umfangsausdehnung L2 der Stege 7 im inneren Bereich. Diese Gestaltung der Stege 7 ist erforderlich, damit bei einer unterschiedlichen Dimensionierung D der scheibenringförmigen Flachbandkäfige 2 deren Freiräume 8 immer rechteckig und immer die gleiche Größe aufweisen, sodass stets auch Käfigfenster 9 gleicher Größe einsetzbar sind. Der Vorteil dieser Ausgestaltungsvariante liegt darin, dass die Freiräume 8 bei unterschiedlichem Käfigdurchmesser immer die gleiche geometrische Ausdehnung aufweisen, sodass nur ein Stanzwerkzeug erforderlich ist. Da die Freiräume 8 bei unterschiedlichem Käfigdurchmesser D immer gleich sind, sind auch die darin eingesetzten Käfigfenster 9 in ihrer geometrischen Ausdehnung immer gleich, sodass für diese ebenfalls bei unterschiedlichem Käfigdurchmesser nur ein Spritzwerkzeug erforderlich ist.

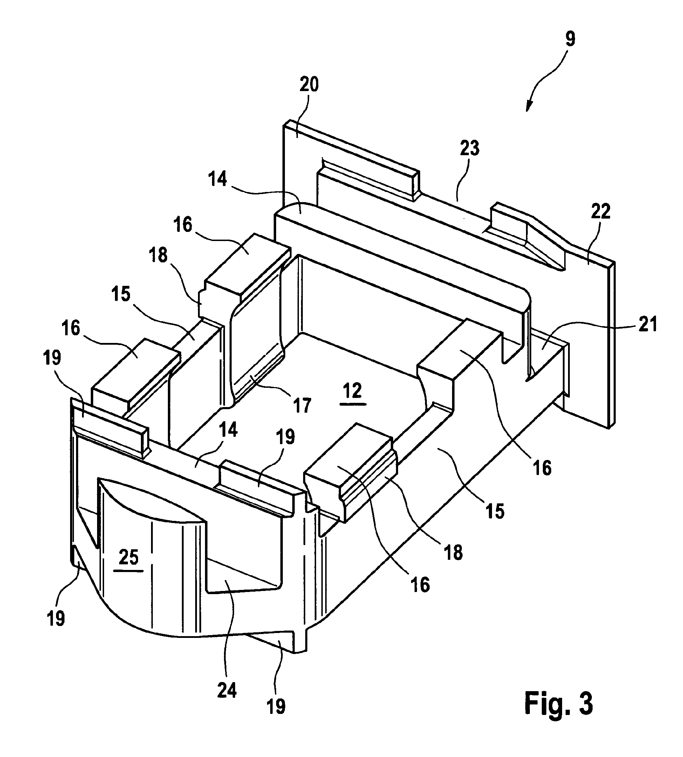

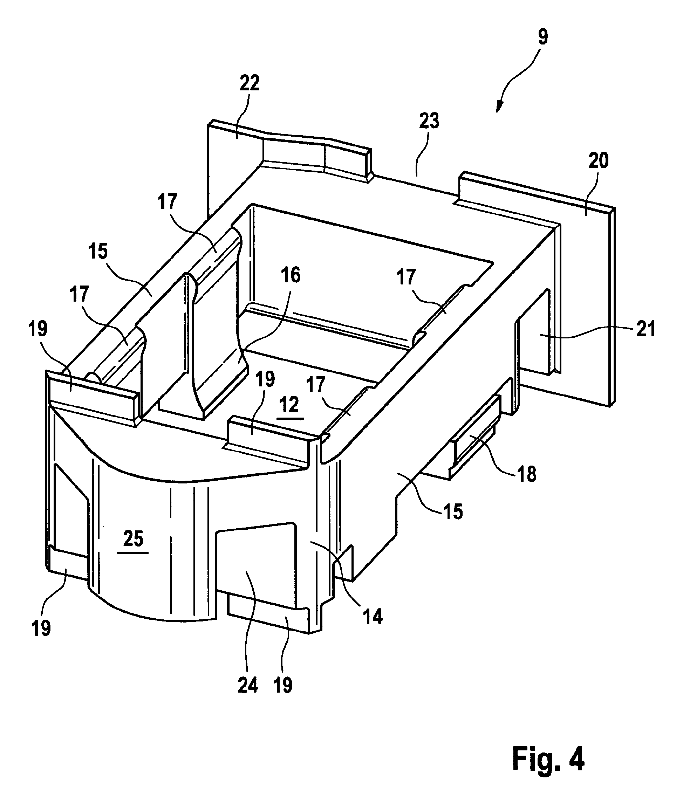

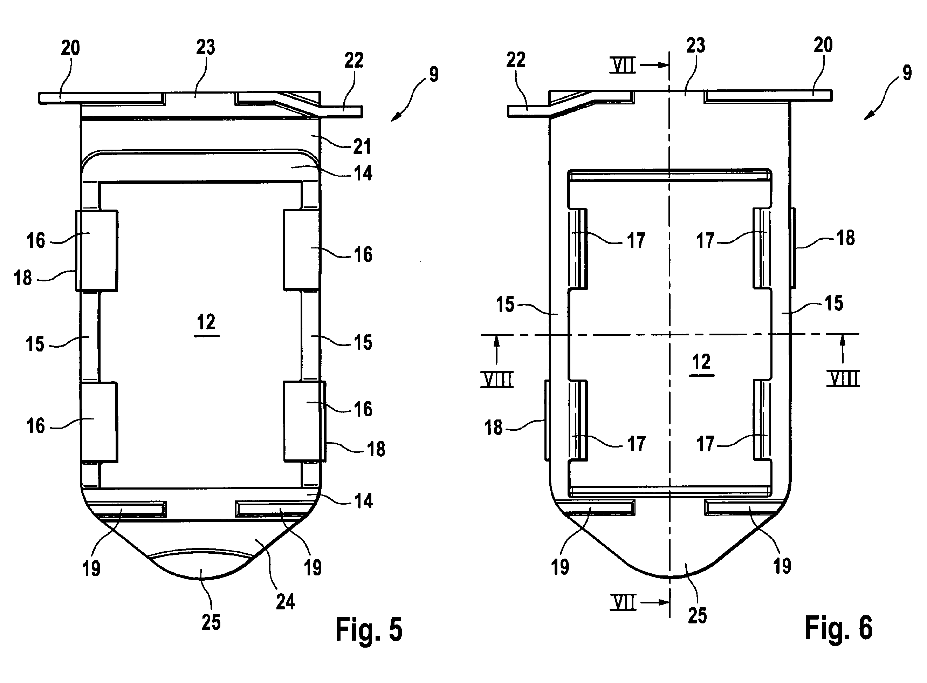

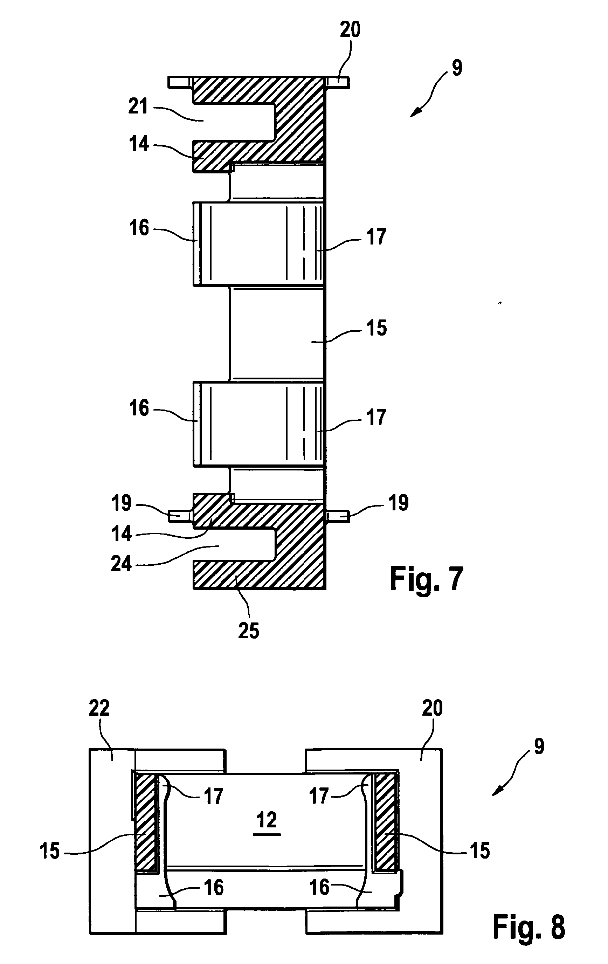

Das in den Figuren 3 bis 8 in verschiedenen Darstellungen gezeigte Kunststofffenster 9 besteht aus den in radialer Richtung voneinander beabstandeten Querwänden 14 und aus den in Umfangsrichtung voneinander beabstandeten Längswänden 15, die die rechteckförmig ausgebildeten Taschen 12 zur Aufnahme der Wälzkörper 13 begrenzen. Die gegenüberliegenden Längswände 15 weisen sowohl in axialer Richtung oben als auch unten gegenüberliegende Haltenasen 16, 17 auf, die in radialer Richtung voneinander beabstandet sind. Auf diese Weise sind die Wälzkörper 13 am Herausfallen aus den Taschen 12 des Käfigfensters 9 in beiden Richtungen gehindert. Darüber hinaus sind die Längswände 15 mit diagonal gegenüberliegenden Haltenasen 18 versehen, die zur Fixierung des Käfigfensters 9 am scheibenringförmigen Flachbandkäfig 2 dienen, indem die Haltenasen 18 hinter den Stegen 7 verschnappt sind. Wie aus den Figuren weiter ersichtlich, ist die radial innenliegende Querwand 14 des Käfigfensters 9 am oberen und am unteren Ende mit je zwei voneinander beabstandeten Vorsprüngen 19 versehen, sodass zwischen diesen ein nicht näher bezeichneter Zwischenraum angeordnet ist. Dieser kann als Vorratsraum für eine zusätzliche Schmiermittelmenge genutzt werden.

Wie insbesondere aus den Figuren 3, 4 und 5 erkennbar, schließt sich im Bereich der radial außen liegenden Querwand 14 ein Dichtelement in Form einer rechteckigen Wandung 20 an. Diese Wandung 20 ist von der Querwand 14 durch die Nut 21 getrennt. Die Wandung 20 ist an einer Seite mit der radial nach innen versetzten Stufe 22 ausgestattet, sodass sich Stufe 23 und Wandung 20 von zwei benachbart angeordneten Käfigfenstern 9 in Umfangsrichtung überdecken. Auf diese Weise ist eine gut wirkende Abdichtung hergestellt. An dieser Stelle wird nochmals Bezug auf die Figur 1 genommen. Dort ist die Überdeckung zwischen Wandung 20 und Stufe 22 in Umfangsrichtung am äußeren Ende des Käfigs 1 zu erkennen. Mit einer Verringerung des Durchmesser D des Käfigs 1 wird sich die Überdeckung zwischen den Teilen 20, 22 verringern, jedoch auch bei kleinstem Durchmesser D immer so sein, dass zwischen zwei benachbarten Käfigfenstern 9 kein freier Spalt gebildet ist.

Wie auch erkennbar, ist die rechteckige Wandung 20 in axialer Richtung sowohl oben als auch unten mit der mittig angeordneten Ausnehmung 23 ausgestattet. Wie aus den genannten Figuren auch ersichtlich, ist die radial innen liegende Querwand 14 über die Nut 24 mit dem Führungsbord 25 verbunden, der zur Zentrierung und radialen Führung des Käfigs 1 dient. Dieser ist zur Einstellung einer möglichst geringen Reibung an einem anliegenden metallischen Lagerteil verrundet. Der scheibenringförmige Flachbandkäfig 2 und die Käfigfenster 9 werden nun derart miteinander verbunden, dass der Flachbandkäfig 2 mit seinen Seitenborden 5 und 6 in die Nuten 21 und 24 des Käfigfensters 9 eingreift, wobei die Fixierung zwischen Flachbandkäfig 2 und Käfigfenster 9 durch die Haltenasen 18 des letztgenannten realisiert ist.

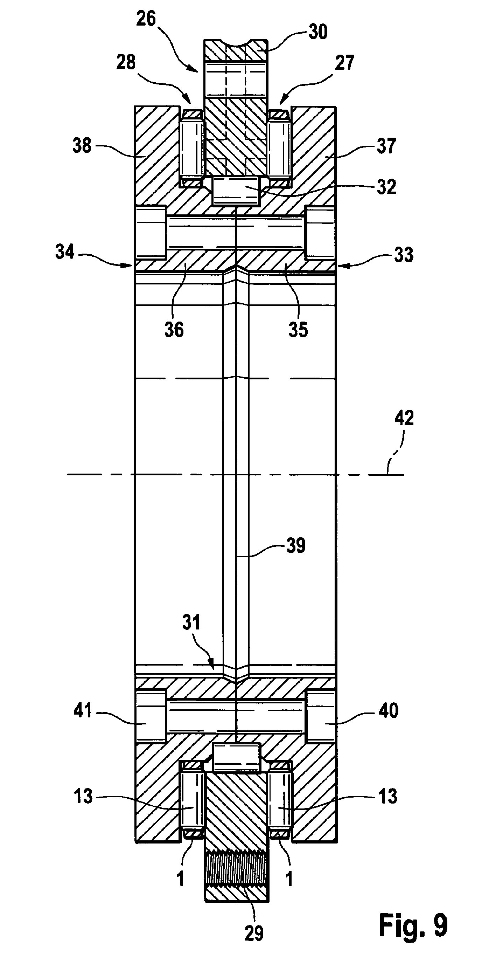

In Figur 9 ist eine Radial-Axial-Wälzlagereinheit gezeigt, in der sich der erfindungsgemäß beschriebene Axialkäfig 1 vorteilhaft einsetzen lässt. Diese besteht aus den Radiallager 26 und den beiden rechts und links daneben angeordneten Axiallagern 27, 28. Das Radiallager 26 weist den mit Befestigungsbohrungen 29 versehenen Außenring 30 und den Innenring 31 auf, die koaxial voneinander beabstandet sind, sodass zwischen ihnen Zylinderrollen 32 abwälzen. Der Innenring 31 ist aus den beiden Teilringen 33, 34 zusammengesetzt, die wiederum aus den axial verlaufenden Teilen 35, 36, sowie den beiden Laufscheiben 37, 38 der Axiallager 27, 28 bestehen. Die Teilringe 33, 34 weisen eine L-förmige Gestalt auf und liegen mit ihren axial verlaufenden Teilen 35, 36 an der Trennebene 39 aneinander. Diese Trennebene 39 liegt im Zentrum der Innenlaufbahn der Zylinderrollen 32, sodass die beiden Teilringe 33, 34 durch die Zylinderrollen 32 zentriert sind, d. h., es kann kein radialer Versatz zwischen den beiden axial verlaufenden Teilen 35, 36 der Teilringe 33, 34 eintreten. Auch sind die Teilringe 33, 34 mit Befestigungsbohrungen 40, 41 versehen, durch die nicht dargestellte Befestigungsschrauben hindurch gesteckt sind und so für einen sicheren Zusammenhalt der Gesamtlagerbaueinheit sorgen. Zu den beiden Axiallagern 27, 28 gehören Wälzkörper 13, die im erfindungsgemäßen Käfig 1 geführt sind. Die nicht bezeichneten Laufbahnen der beiden Axiallager 27, 28 werden einerseits von den einander gegenüberliegenden Stirnseiten des Außenringes 30 vom Radiallager 26 und andererseits von den beiden Laufscheiben 37, 38 gebildet, die einstückig mit dem axial verlaufenden Teil 35, 36 verbunden sind und die so in der bereits beschriebenen Weise die L-förmig ausgebildeten Teilringe 33, 34 bilden, die wiederum den Innenring 31 ergeben. Die Lagerachse für das Radiallager 26 und die beidseitig angeordneten Axiallager 27, 28 ist mit dem Bezugszeichen 42 versehen.

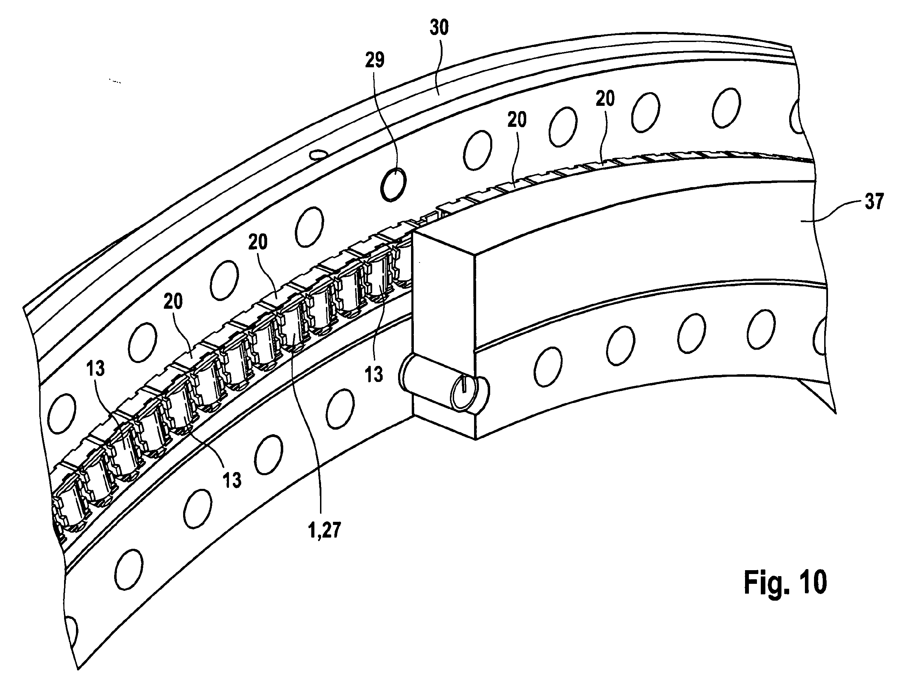

Schließlich ist in Figur 10 ausschnittsweise ein ähnliches Radial-Axial-Wälzlager wie in Figur 9 dargestellt. Es ist erkennbar, dass das rechtsseitig angeordnete Axiallager 27 mit dem erfindungsgemäßen Axialkäfig 1 ausgestaltet ist, wobei die Laufbahnen für dieses Axialwälzlager 27 wiederum einerseits von der Stirnfläche des Außenringes 30 und andererseits von der Laufscheibe 27 gebildet sind. Wie ersichtlich, ist der axiale Spalt zwischen der Stirnfläche des Außenrings 30 und Laufscheibe 37 durch die Wandung 20 des Axialkäfigs 1 sicher abgedeckt ist. Die Darstellung lässt auch erkennen, dass einerseits die günstigen Gleiteigenschaften der Kunststoffe durch die Käfigfenster 9 zur Führung der Wälzkörper und andererseits zur Verminderung der Reibung ausgenutzt werden, da zwischen der Wandung 20 und den Laufbahnen der Wälzkörper 13 eine Reibung Metall/Metall verhindert ist. Hinzu kommt, dass durch die Kombination scheibenförmiger Flachbandkäfige 2 und Kunststofffenster 9 ein ausreichend stabiler Käfig 1 gebildet ist.

### Bezugszeichenliste

- 1: Axialkäfig
- 2: scheibenringförmiger Flachbandkäfig
- 3: Segment
- 4: Segment
- 5: Seitenbord
- 6: Seitenbord
- 7: Steg
- 8: Freiraum
- 9: Käfigfenster
- 10: Ausnehmung
- 11: Vorsprung
- 12: Tasche
- 13: Wälzkörper
- 14: Querwand
- 15: Längswand
- 16: Haltenase
- 17: Haltenase
- 18: Haltenase
- 19: Vorsprung
- 20: Wandung
- 21: Nut
- 22: Stufe
- 23: Ausnehmung
- 24: Nut
- 25: Führungsbord
- 26: Radiallager
- 27: Axiallager
- 28: Axiallager
- 29: Befestigungsbohrung
- 30: Außenring
- 31: Innenring
- 32: Zylinderrolle
- 33: Teilring
- 34: Teilring
- 35: axial verlaufender Teil
- 36: axial verlaufender Teil
- 37: Laufscheibe
- 38: Laufscheibe
- 39: Trennebene
- 40: Befestigungsbohrung
- 41: Befestigungsbohrung
- 42: Lagerachse

- D: Durchmesser
- L1: Umfangsausdehnung
- L2: Umfangsausdehnung

## Patentansprüche

1. Mehrteiliger Axialkäfig (1) für ein Großwälzlager, bestehend aus einem Metallband, dessen kreisförmig ausgebildete Seitenborde (5, 6) durch Stege (7) miteinander verbunden sind, so dass Freiräume (8) gebildet sind, in die Käfigfenster (9) aus einem Kunststoff mit Taschen (12) zur Aufnahme von Wälzkörpern (13) eingesetzt sind, wobei die Käfigfenster (9) aus in Umfangsrichtung voneinander beabstandeten Längswänden (15) und in radialer Richtung voneinander beabstandeten Querwänden (14) bestehen, die Käfigfenster (9) in radialer Richtung voneinander beabstandete Nuten (21, 24) aufweisen, in die die Seitenborde (5, 6) des Metallbandes eingreifen und die Käfigfenster (9) Haltenasen (16, 17) zur Halterung der Wälzkörper (13) und einen Führungsbord (25) aufweisen, der zur Führung des Axialkäfigs (1) an einem der Lagerringe anliegt, **dadurch gekennzeichnet, dass** das Metallband als ein scheibenringförmiger Flachbandkäfig (2) ausgebildet ist und die Käfigfenster (9) an ihrem dem Führungsbord (25) gegenüberliegenden Ende mit je einem Dichtelement versehen sind, das einen zwischen Laufbahnen der Wälzkörper (13) gebildeten axialen Spalt abdeckt, wobei sich die Dichtelemente der einzelnen Käfigfenster (9) in Umfangsrichtung überdecken.

2. Mehrteiliger Axialkäfig (1) nach Anspruch 1, **dadurch gekennzeichnet, dass** die Dichtelemente als rechteckige Wandungen (20) ausgebildet sind, die an ihren in axialer Richtung gegenüberliegenden Enden mit einer Ausnehmung (23) versehen sind.

3. Mehrteiliger Axialkäfig (1) nach Anspruch 2, **dadurch gekennzeichnet, dass** die rechteckige Wandung (20) des einen Käfigfensters (9) an einem Ende in Umfangsrichtung eine radial versetzte Stufe (21) aufweist, an der die rechteckige Wandung (20) des nächsten Käfigfensters (9) zur Anlage gelangt, so dass sich Stufe (21) und Wandung (20) in Umfangsrichtung überdecken.

4. Mehrteiliger Axialkäfig (1) nach Anspruch 1, **dadurch gekennzeichnet, dass** die Längswände (15) des Käfigfensters (9) mit je einer gegenüberliegenden Haltenase (18) zur formschlüssigen Verbindung mit einem Freiraum (8) des Flachbandkäfigs (2) versehen sind.

5. Mehrteiliger Käfig (1) nach Anspruch 1, **dadurch gekennzeichnet, dass** die radial innen liegenden Querwände (14) am axial oberen und am axial unteren Ende mit je zwei voneinander beabstandeten Vorsprüngen (19) versehen sind.

6. Mehrteiliger Axialkäfig (1) nach Anspruch 1, **dadurch gekennzeichnet, dass** der scheibenringartige Flachbandkäfig (2) aus wenigstens zwei Segmenten (3, 4) besteht, die an ihren Enden formschlüssig miteinander verbunden sind.

7. Mehrteiliger Axialkäfig (1) nach Anspruch 7, **dadurch gekennzeichnet, dass** jedes Segment (4, 3) an einem Ende einen Vorsprung (11) und am anderen Ende eine Ausnehmung (10) besitzt, die miteinander korrelieren.

8. Reihe von mehrteiligen Axialkäfigen (1) nach Anspruch 1, **dadurch gekennzeichnet, dass** diese einen unterschiedlichen Durchmesser (D) aufweisen, die Umfangsausdehnung (L1) der Stege (7) radial außen größer als die Umfangsausdehnung (L2) radial innen ist, wobei die geometrische Abmessung der Freiräume (8) des Flachbandkäfigs (2) und die geometrische Abmessung der Käfigfenster (9) unabhängig vom Käfigdurchmesser immer gleich ist.

9. Radial-Axial-Wälzlagerbaueinheit mit einem Innenring (31), zu dem koaxial ein Außenring (30) angeordnet ist, zwischen denen zur Aufnahme von radialen Kräften Wälzkörper (32) abrollen und mit beidseitig zur Aufnahme von axialen Kräften angeordneten, in einem Axialkäfig (1) aufgenommenen zylindrischen Wälzkörpern (13), deren Laufbahnen einerseits von den Stirnflächen des Außenringes (30) und andererseits von je einer Laufscheibe (37, 38) gebildet sind, **dadurch gekennzeichnet, dass** als Axialkäfig (1) jeweils ein mehrteiliger Axialkäfig nach einem der Ansprüche 1 bis 7 in einem Axialteil der Radial-Axial-Wälzlagerbaueinheit eingesetzt ist.

## Claims

1. Multi-part axial cage (1) for a large-diameter roller bearing, composed of a metal strip whose side rims (5, 6), which are of a circular shape, are connected to one another by means of webs (7), with the result that free spaces (8) are formed into which cage windows (9) composed of a plastic with pockets (12) for receiving rolling bodies (13) are inserted, wherein the cage windows (9) are composed of longitudinal walls (15) which are spaced apart from one another in the circumferential direction and lateral walls (14) which are spaced apart from one another in the radial direction, the cage windows (9) have grooves (21, 24) which are spaced apart from one another in the radial direction and into which the side rims (5, 6) of the metal strip engage, and the cage windows (9) have securing lugs (16, 17) for securing the rolling bodies (13), and a guide rim (25) which bears against one of the bearing rings in order to guide the axial cage (1), **characterized in that** the metal strip is embodied as a flat cage (2) in the form of an annular disk, and the cage windows (9) are each provided, at their end lying opposite the guide rim (25), with a sealing element which covers an axial gap formed between raceways of the rolling bodies (13), wherein the sealing elements of the individual cage windows (9) overlap in the circumferential direction.

2. Multi-part axial cage (1) according to Claim 1, **characterized in that** the sealing elements are embodied as rectangular walls (20) which are provided with a recess (23) at their ends lying opposite one another in the axial direction.

3. Multi-part axial cage (1) according to Claim 2, **characterized in that** the rectangular wall (20) of one of the cage windows (9) has a radially offset step (21) at one end in the circumferential direction, against which step the rectangular wall (20) of the next cage window (9) comes to bear, with the result that the step (21) and the wall (20) overlap in the circumferential direction.

4. Multi-part axial cage (1) according to Claim 1, **characterized in that** the longitudinal walls (15) of the cage window (9) are each provided with one securing lug (18), which securing lugs (18) lie opposite one another and are intended for positively locking connection to a free space (8) of the flat cage (2).

5. Multi-part axial cage (1) according to Claim 1, **characterized in that** the radially inner lateral walls (14) are respectively provided with two projections (19) spaced apart from one another at the axially upper end and with two projections (19) spaced apart from one another at the axially lower end.

6. Multi-part axial cage (1) according to Claim 1, **characterized in that** the flat cage (2) in the form of an annular disk is composed of at least two segments (3,4) which are connected to one another in a positively locking fashion at their ends.

7. Multi-part axial cage (1) according to Claim 7, **characterized in that** each segment (4, 3) has a projection (11) at one end and a recess (10) at the other end, which projection (11) and recess (10) correlate with one another.

8. Series of multi-part axial cages (1) according to Claim 1, **characterized in that** said multi-part axial cages (1) have a different diameter (D) and the circumferential extent (L1) of the webs (7) is greater in the radially outer direction than the circumferential extent (L2) in the radially inner direction, wherein the geometric dimension of the free spaces (8) of the flat cage (2) and the geometric dimension of the cage windows (9) are always the same irrespective of the diameter of the cage.

9. Radial/axial roller bearing unit having an inner ring (31), coaxially with respect to which an outer ring (30) is arranged, between which inner and outer rings (31, 30) rolling bodies (32) roll in order to take up radial forces, and having cylindrical rolling bodies (13) which are held in an axial cage (1) and are arranged on both sides in order to take up axial forces, and the raceways of which are formed by the end faces of the outer ring (30) and by one washer disk (37, 38) each, **characterized in that**, as axial cage (1), in each case one multi-part axial cage according to one of Claims 1 to 7 is inserted into an axial part of the radial/axial roller bearing unit.

## Revendications

1. Cage axiale en plusieurs parties (1) pour un palier à roulement de grande dimension, constituée d'une bande métallique dont les bords latéraux (5, 6) réalisés sous forme circulaire sont connectés l'un à l'autre par des nervures (7), de sorte que des espaces libres (8) soient formés, dans lesquels des fenêtres de cage (9) en plastique, avec des cavités (12) pour recevoir des corps de roulement (13), sont insérées, les fenêtres de cage (9) se composant de parois longitudinales (15) espacées les unes des autres dans la direction périphérique et de parois transversales (14) espacées les unes des autres dans la direction radiale, les fenêtres de cage (9) présentant des rainures (21, 24) espacées les unes des autres dans la direction radiale, dans lesquelles s'engagent les bords latéraux (5, 6) de la bande métallique, et les fenêtres de cage (9) présentant des ergots de retenue (16, 17) pour retenir les corps de roulement (13) et un bord de guidage (25), qui s'applique contre l'une des bagues de palier pour guider la cage axiale (1), **caractérisée en ce que** la bande métallique est réalisée sous forme de cage à bande plate (2) en forme de disque annulaire et les fenêtres de cage (9) sont pourvues, à leur extrémité opposée au bord de guidage (25), d'un élément d'étanchéité respectif, qui recouvre une fente axiale formée entre les pistes de roulement des corps de roulement (13), les éléments d'étanchéité des fenêtres de cage individuelles (9) se recouvrant dans la direction périphérique.

2. Cage axiale en plusieurs parties (1) selon la revendication 1, **caractérisée en ce que** les éléments d'étanchéité sont réalisés sous forme de parois rectangulaires (20) qui sont pourvues d'un évidement (23) à leurs extrémités opposées dans la direction axiale.

3. Cage axiale en plusieurs parties (1) selon la revendication 2, **caractérisée en ce que** la paroi rectangulaire (20) de l'une des fenêtres de cage (9) présente, à une extrémité, dans la direction périphérique, un étage décalé radialement (21), contre lequel s'appuie la paroi rectangulaire (20) de la fenêtre de cage suivante (9), de sorte que l'étage (21) et la paroi (20) se recouvrent dans la direction périphérique.

4. Cage axiale en plusieurs parties (1) selon la revendication 1, **caractérisée en ce que** les parois longitudinales (15) de la fenêtre de cage (9) sont pourvues d'un ergot de retenue opposé respectif (18) pour la connexion par engagement par correspondance géométrique avec un espace libre (8) de la cage à bande plate (2).

5. Cage axiale en plusieurs parties (1) selon la revendication 1, **caractérisée en ce que** les parois transversales (14) situées radialement à l'intérieur sont pourvues, sur l'extrémité axialement supérieure et sur l'extrémité axialement inférieure, de deux saillies respectives (19) espacées l'une de l'autre.

6. Cage axiale en plusieurs parties (1) selon la revendication 1, **caractérisée en ce que** la cage à bande plate (2) en forme de disque annulaire se compose d'au moins deux segments (3, 4) qui sont connectés à leurs extrémités par engagement par correspondance géométrique.

7. Cage axiale en plusieurs parties (1) selon la revendication 7, **caractérisée en ce que** chaque segment (4, 3) possède à une extrémité une saillie (11) et à l'autre extrémité un évidement (10), lesquels sont en corrélation.

8. Rangée de cages axiales en plusieurs parties (1) selon la revendication 1, **caractérisée en ce que** celles-ci présentent un diamètre différent (D), l'étendue périphérique (L1) des nervures (7) radialement à l'extérieur étant plus grande que l'étendue périphérique (L2) radialement à l'intérieur, la dimension géométrique des espaces libres (8) de la cage à bande plate (2) et la dimension géométrique des fenêtres de cage (9) étant toujours identiques indépendamment du diamètre de la cage.

9. Unité constructive de palier à roulement radial-axial comprenant une bague intérieure (31), coaxialement à laquelle est disposée une bague extérieure (30), entre lesquelles roulent des corps de roulement (32) pour recevoir des forces radiales, et comprenant des corps de roulement cylindriques (13) disposés de chaque côté, pour recevoir des forces axiales, et reçus dans une cage axiale (1), dont les pistes de roulement sont formées d'une part par les faces frontales de la bague extérieure (30) et d'autre part par un disque de roulement respectif (37, 38), **caractérisée en ce que** l'on utilise comme cage axiale (1) à chaque fois une cage axiale en plusieurs parties selon l'une quelconque des revendications 1 à 7, dans une partie axiale de l'unité constructive de palier à roulement radial-axial.
